# NEUE EUROPÄISCHE PATENTSCHRIFT

(11) **EP 1 515 791 B2**
(45) Veröffentlichungstag und Bekanntmachung des Hinweises auf die Entscheidung über den Einspruch: **21.08.2019**
(45) Hinweis auf die Patenterteilung: 03.08.2011
(21) Anmeldenummer: 03735591.4
(22) Anmeldetag: 10.06.2003
(51) Int. Cl.: B01D 53/86, B01J 8/04, B01J 8/02, B01J 19/30, B01J 29/06

(54) **VERFAHREN ZUR VERRINGERUNG DES GEHALTS AN NOX UND N2O IN GASEN**
METHOD FOR REDUCING THE NOX AND N2O O OF GASES
PROCEDE POUR REDUIRE LA TENEUR EN NOX ET N2O DANS DES GAZ

(30) Priorität: 13.06.2002 DE 10226461
(43) Veröffentlichungstag der Anmeldung: 23.03.2005
(60) Teilanmeldung: 10014425.2
(73) Patentinhaber: thyssenkrupp Industrial Solutions AG, 45143 Essen (DE)
(72) Erfinder: SCHWEFER, Meinhard, 59872 Meschede (DE); GROVES, Michael, 45529 Hattingen (DE); SIEFERT, Rolf, 33378 Rheda-Wiedenbrück (DE); MAURER, Rainer, 58332 Schwelm (DE)
(74) Vertreter: Loock, Jan Pieter
(86) Internationale Anmeldenummer: PCT/EP2003/006051
(87) Internationale Veröffentlichungsnummer: WO 2003/105998

(56) Entgegenhaltungen:
- EP-A- 0 967 006
- EP-A- 1 022 056
- WO-A-01/51181
- WO-A-01/51182
- WO-A-02/068098
- WO-A1-00/48715
- WO-A1-96/01689
- US-A- 2 475 855
- US-A- 3 733 181
- US-A- 4 372 920
- US-A- 5 053 210
- US-A- 5 451 387
- US-A- 5 482 692
- US-A- 5 516 497
- US-A1- 2002 039 550
- Kieger S. et al: "Réduction catalatique sélective des NOx et de N20 par NH3 sur Fe-FER", Conférence Internationale NOXCONF 2001, vol. 24, 21 March 2001 (2001-03-21), - 22 March 2001 (2001-03-22), Paris la Défense
- Entscheidung T1532/05, 19032010
- Coq B. et al: "The simultaneous catalytic reduction of NO and N20 by NH3 using an Fezeolite-beta-catalyst", Appl. Catal B, vol. 27, 2000, pages 193-198,
- Long R. et al: "Superior Fe-ZSM-5 catalyst for selective catalytic reduction of nitric oxide by ammonia", Am. Chem. Soc., vol. 121, 1999, pages 5595-5596,
- Mauvezin M. et al: "N20decomposition in the presence of ammonia on faujasite-supported metal catalysts", Appl. Catal B, vol. 23, 1999, pages L79-L82,
- Mauvezin M. et al: "Catalytic reduction of N20 by NH3 in presence of oxygen using FE-exchanged zeolites", Catal. Lett., vol. 62, 1999, pages 41-44,
- Schreiben des Patentanmelders vom 30.11.2004 aus dem Erteilungsverfahren des vorliegenden streitpatents (Patentanmeldung EP03735591), Patentveröffentlichungsnummer EP1515791

## Beschreibung

Die vorliegende Erfindung betrifft ein Verfahren zur Verringerung Gehaltes an Stickoxiden in Gasen, insbesondere in Prozess- und Abgasen.

Bei vielen Prozessen, wie z.B. Verbrennungsprozessen oder bei der industriellen Herstellung von Salpetersäure resultiert ein mit Stickstoffmonoxid NO, Stickstoffdioxid NO₂ (zusammen bezeichnet als NOₓ) sowie Lachgas N₂O beladenes Abgas. Während NO und NO₂ seit langem als Verbindungen mit ökotoxischer Relevanz bekannt sind (Saurer Regen, Smog-Bildung) und weltweit Grenzwerte für deren maximal zulässige Emissionen festgelegt sind, rückt in den letzten Jahren in zunehmenden Maße auch Lachgas in den Focus des Umweltschutzes, da dieses in nicht unerheblichem Maße zum Abbau von stratosphärischem Ozon und zum Treibhauseffekt beiträgt. Es besteht daher aus Gründen des Umweltschutzes ein dringender Bedarf an technischen Lösungen, die Lachgasemissionen zusammen mit den NOₓ-Emissionen zu beseitigen.

Zur separaten Beseitigung von N₂O einerseits und andererseits sind bereits zahlreiche Möglichkeiten bekannt.

Bei der NOₓ-Reduktion ist die selektive katalytische Reduktion (SCR) von NOₓ mittels Ammoniak in Gegenwart vanadiumhaltiger TiO₂-Katalysatoren hervorzuheben (vgl. etwa G. Ertl, H. Knözinger J. Weitkamp: Handbook of Heterogeneous Catalysis, Vol. 4, Seiten 1633-1668, VCH Weinheim (1997)). Diese kann je nach Katalysator bei Temperaturen von ca. 150°C bis ca. 450°C ablaufen und ermöglicht einen NOₓ-Abbau von mehr als 90%. Sie ist die meist genutzte Variante der NOₓ-Minderung aus Abgasen industrieller Prozesse.

Auch auf Basis von Zeolith-Katalysatoren finden sich Verfahren zur Reduktion von NOₓ, die unter Verwendung verschiedenster Reduktionsmittel ablaufen. Neben Cuausgetauschten Zeolithen (vergl. z.B. 0914866) scheinen vor allem eisenhaltige Zeolithe für praktische Anwendung von Interesse.

So beansprucht US-A-4,571,329 ein Verfahren zur Reduktion von NOₓ in einem Gas, welches zu mindestens 50% aus NO₂ besteht, mittels Ammoniak in Gegenwart eines Fe-Zeolithen. Das Verhältnis von NH₃ zu NO₂ beträgt mindestens 1,3. Gemäß des hier beschriebenen Verfahrens sollen NOₓ-enthaltende Gase mit Ammoniak reduziert werden, ohne dass es zur Bildung von N₂O als Nebenprodukt kommt.

US 5,451,387 beschreibt ein Verfahren zur selektiven katalytischen Reduktion von NOₓ mit NH₃ über eisenausgetauschten Zeolithen, welches bei Temperaturen um 400°C arbeitet.

Im Unterschied zur NOₓ- Minderung in Abgasen, die seit vielen Jahren in der Technik etabliert ist, existieren zur N₂O-Beseitigung nur wenige technische Prozesse, die zumeist auf einen thermischen oder katalytischen Abbau des N₂O abzielen. Eine Übersicht über die Katalysatoren, deren prinzipielle Eignung zum Abbau und zur Reduktion von Lachgas nachgewiesen wurde, gibt Kapteijn et al. (Kapteijn F. et al., Appl. Cat. B: Environmental 9 (1996) 25-64).

Als besonders geeignet erscheinen wiederum Fe- und Cu-Zeolith-Katalysatoren, die entweder eine reine Zersetzung des N₂O in N₂ und O₂ bewirken (US-A-5,171,553), oder auch zur katalytischen Reduktion des N₂O mit Hilfe von NH₃ oder Kohlenwasserstoffen zu N₂ und H₂O bzw. CO₂ dienen.

So wird in JP-A-07 060 126 ein Verfahren zur Reduktion von N₂O mit NH₃ in Gegenwart von eisenhaltigen Zeolithen vom Pentasil-Typ bei Temperaturen von 450°C beschrieben. Der mit diesem Verfahren erreichbare N₂O-Abbau liegt bei 71%.

Mauvezin et al. geben in Catal. Lett. 62 (1999) 41-44 eine diesbezügliche Übersicht über die Eignung verschiedener, eisenausgetauschter Zeolithe vom Typ MOR, MFI, BEA, FER, FAU, MAZ und OFF. Danach kann eine mehr als 90%ige N₂O-Reduktion durch NH₃-Zugabe unterhalb von 500°C nur im Falle von Fe-BEA erreicht werden.

Neben den zuvor genannten Verfahren zur separaten Beseitigung von N₂O und NOₓ existieren aber auch Verfahren zur kombinierten Beseitigung, die unter Verwendung eines einzigen Katalysators ablaufen können.

Aus der WO-A-00/48715 ist ein Verfahren bekannt, bei dem ein NOₓ und N₂O enthaltendes Abgas bei Temperaturen zwischen 200 und 600°C über einen Eisen-Zeolith-Katalysator vom Typ Beta (= Typ BEA) geleitet wird, wobei das Abgas außerdem NH₃ in einem Mengenverhältnis zwischen 0,7 und 1,4 bezogen auf die Gesamtmenge an NOₓ und N₂O enthält. NH₃ dient hier als Reduktionsmittel sowohl für NOₓ als auch für N₂O. Das Verfahren arbeitet zwar bei Temperaturen von kleiner als 500°C, besitzt aber wie das vorgenannte Verfahren den prinzipiellen Nachteil, dass zur Beseitigung des N₂O Gehaltes eine in etwa äquimolare Menge an Reduktionsmittel (hier NH₃) benötigt wird. Ferner offenbaren B. Coq et al. in "The simultaneous catalytic reduction of NO and N2O by NH3 using an FE-zeolite-beta catalyst", Applied Catalysis B: Environmental 27 (2000) 193-198 die gleichzeitige Reduktion von NO und N₂O in Gegenwart eines Fe-Zeolith-beta Katalysators, die durch vier verschiedene, gleichzeitig ablaufende Reaktionen beschrieben werden kann.

Aus derWO-A-01/51,181 ist ein Verfahren zur Beseitigung von ein NOₓ und N₂O bekannt, worin ein Prozess- oder Abgas durch zwei Reaktionszonen geleitet, die mit Eisen beladene Zeolithe als Katalysatoren enthalten. In der ersten Reaktionszone wird dabei N₂O abgebaut, zwischen der ersten und der zweiten Reaktionszone wird dem Gasgemisch Ammoniak zugesetzt und in der zweiten Reduktionszone wird NOₓ reduziert.

Es wurde jetzt überraschenderweise gefunden, dass die Effektivität des oben genannten Verfahrens deutlich gesteigert werden kann, wenn die Minderung des N₂O-Gehaltes bis zum gewünschten Abbaugrad nicht alleinig in der ersten Reaktionszone erfolgt, sondern auch die Reaktionszone der NOₓ-Reduktion zur N₂O-Minderung genutzt werden kann. Dieses wurde möglich, seitdem überraschend festgestellt wurde, dass bei Verwendung von Eisen-beladenen Zeolith-Katalysatoren eine simultane NOₓ-Reduktion (z.B. mittels NH₃) und N₂O-Zersetzung möglich ist. Der Beitrag zur N₂O-Zersetzung in der zweiten Reaktionsstufe ist dann besonders groß, wenn das Verfahren bei erhöhten Drucken, d.h. bei Drucken oberhalb von 2 bar, vorzugsweise oberhalb von 4 bar betrieben wird.

Aufgabe der vorliegenden Erfindung ist es, ein einfaches, aber wirtschaftliches Verfahren zur Verfügung zu stellen, das gute Umsätze sowohl für den NOₓ- als auch für den N₂O-Abbau liefert, sich durch minimale Betriebs- und Investitionskosten auszeichnet. Zu ersteren zählen neben der Energie zur Einstellung der notwendigen Betriebstemperatur der Verbrauch an Reduktionsmittel sowie Energieverluste durch Strömungswiderstände im Katalysatorbett (Druckverluste). Die Investitionskosten werden wesentlich bestimmt durch die benötigten Mengen an Katalysator und die damit verbundenen Apparatevolumina.

Zusätzlich besteht das Problem der Einbringung des Reduktionsmittels, welches mit dem zu behandelnden Gasstrom innig gemischt werden muss, um einem möglichst hohen Wirkungsgrad des Reduktionsmittels zu gewährleisten (Vermeidung von Schlupf und Nebenreaktionen). Der hierzu notwendige Mischer sollte aus aufstellungstechnischen und wirtschaftlichen Erwägungen möglichst platzsparend angeordnet sein.

Diese Aufgaben werden durch das erfindungsgemäße Verfahren gemäß Anspruch 1 gelöst.

Gegenstand der Erfindung ist ein Verfahren zur Minderung des Gehalts von NOₓ und N₂O in Gasen, insbesondere in Prozessgasen und Abgasen, umfassend die Maßnahmen:
a) Leiten des N₂O und NOₓ enthaltenden Gases über eine Folge zweier Katalysatorbetten enthaltend einen oder mehrere mit Eisen beladene Zeolithe,
b) Zugabe eines Reduktionsmittels für NOₓ zwischen den Katalysatorbetten,
c) Einstellen einer Temperatur von weniger als 500°C im ersten Katalysatorbett und zweiten Katalysatorbett,
d) Einstellen eines Gasdruckes von mindestens 2 bar in den beiden Katalysatorbetten,
e) Auswahl einer solchen Raumgeschwindigkeit im ersten und zweiten Katalysatorbett, so dass im ersten Katalysatorbett ein Abbau des N₂O- Gehalts des Gases um höchstens bis zu 90%, bezogen auf den N₂O Gehalt am Eingang des ersten Katalysatorbettes, erfolgt und sich ein N₂O- Gehalt von größer als 200 ppm einstellt und dass im zweiten Katalysatorbett ein weiterer Abbau des N₂O-Gehalts des Gases um mindestens 30%, bezogen auf den N₂O Gehalt am Eingang des zweiten Katalysatorbettes, erfolgt,
f) wobei als Reduktionsmittel für NOₓ Ammoniak verwendet wird, das in einer Menge von 1,0 bis 1,2 molaren Anteilen, bezogen auf einen molaren Anteil an abzubauenden NOₓ eingesetzt wird.

Im ersten Katalysatorbett zur reinen N₂O-Zersetzung beschleunigt dabei das noch im Gas vorhandene NOₓ erwartungsgemäß die gewünschte N₂O Zersetzung durch eine aktivierende Wirkung, wie diese für unterschiedliche NₐO/NOₓ-Verhältnisse von Kögel et al. in Catal. Comm. 2 (2001)273-6 beschrieben wurde.

Aber auch im zweiten Katalysatorbett kann ein merklicher N₂O-Abbau durch Zersetzung in Stickstoff und Sauerstoff erreicht werden. Dies war überraschend, da zum einen der NOₓ-Gehalt, welcher die N₂O-Zersetzung aktiviert, durch Zugabe des Reduktionsmittels reduziert wird und zum anderen erwartet wurde, dass das zugesetzte Reduktionsmittel intermediär auf der Katalysatoroberfläche adsorbiert und damit die aktiven Zentren zur N₂O Zersetzung blockiert.

Unter den gewählten Verfahrensbedingungen, also den erhöhten Drücken und insbesondere einem reduzierten Verhältnis NH₃/NOₓ kommen diese Einflüsse aber offenbar nicht zum Tragen.

Das erfindungsgemäße Verfahren ermöglicht es damit, sowohl die Zersetzung von N₂O, als auch die Reduktion von NOₓ bei einer niedrigen Betriebstemperatur und wirtschaftlichen Raumgeschwindigkeiten durchzuführen und gleichzeitig hohe Abbauraten von N₂O und NOₓ zu erzielen.

Unter dem Begriff Raumgeschwindigkeit ist dabei der Quotient aus Volumenanteilen Gasgemisch (gemessen bei 0 °C und 1,014 bara) pro Stunde bezogen auf einen Volumenanteil Katalysator zu verstehen. Die Raumgeschwindigkeit kann somit über den Volumenstrom des Gases und/oder über die Katalysatormenge eingestellt werden.

Das mit Stickstoffoxiden beladene Gas wird üblicherweise mit einer Raumgeschwindigkeit von 200 bis 200.000 h⁻¹, vorzugsweise von 5.000 bis 100.000 h⁻¹, insbesondere von 5.000 bis 50.000 h⁻¹, bezogen auf das addierte Katalysatorvolumen beider Katalysatorbetten, über den Katalysator geleitet.

Nach Verlassen des ersten Katalysatorbettes liegt der Gehalt an N₂O nach dem erfindungsgemäßen Verfahren oberhalb von 200 ppm, insbesondere oberhalb von 300 ppm Im ersten Katalysatorbett erfolgt eine höchstens 90 %ige, vorzugsweise höchstens 80%ige Minderung des zu Beginn des ersten Katalysatorbettes vorhandenen N₂O-Gehaltes.

Nach dem Verlassen des ersten Katalysatorbettes wird das N₂O und NOₓ enthaltende Gas zunächst mit einem gasförmigen Reduktionsmittel, vorzugsweise mit NH₃, gemischt und anschließend zum gleichzeitigen Abbau von N₂O (durch Zersetzung) und NOₓ (durch Reduktion) bei einer Temperatur von vorzugsweise weniger als 450°C mit der ausgewählten Raumgeschwindigkeit über den Katalysator geleitet.

Im zweiten Katalysatorbett erfolgt eine zusätzliche mindestens 30 %ige, vorzugsweise mindestens 40%ige Minderung des zu Beginn des zweiten Katalysatorbettes vorhandenen N₂O-Gehaltes.

Bei dem erfindungsgemäßen Verfahren kommen im ersten und zweiten Katalysatorbett eisenhaltige Zeolithe zum Einsatz. Dabei kann es sich um unterschiedliche Katalysatoren in den jeweiligen Katalysatorbetten oder bevorzugt um den gleichen Katalysator handeln.

Bei einer räumlichen Trennung der Katalysatorbetten ist es möglich, die Temperatur des zweiten Katalysatorbettes bzw. des hierin eintretenden Gastromes durch

Wärmeabfuhr oder -zufuhr so einzustellen, dass sie niedriger oder höher als die des ersten Katalysatorbettes ist.

Die Temperatur des Gasstromes im ersten Katalysatorbett, in dem nur das N₂O abgebaut wird, sowie im zweiten Katalysatorbett, in dem N₂O und NOₓ abgebaut werden, liegt erfindungsgemäß unterhalb von 500 °C, vorzugsweise im Bereich von 250 bis 500°C, insbesondere bei 300 bis 450°C, und ganz besonders bevorzugt bei 350 bis 450°C. Die Temperatur im zweiten Katalysatorbett entspricht bevorzugt der Temperatur im ersten Katalysatorbett. Die Temperatur im Katalysatorbett lässt sich zweckmässigerweise als arithmetischer Mittelwert der Temperatur des Gasstromes am Ein- und Austritt des Katalysatorbettes bestimmen.

Die Wahl der Betriebstemperatur ist dabei ebenso wie gewählten Raumgeschwindigkeiten bestimmt durch den gewünschten Abbaugrad an N₂O.

Vorzugsweise erfolgen die Auswahl von Temperatur, Volumenstrom und Katalysatormenge im ersten Katalysatorbett derart, dass dort höchstens 90 %, vorzugsweise höchstens 80% und ganz besonders bevorzugt höchstens 70% des zu Beginn des ersten Katalysatorbettes vorhandenen N₂O zersetzt werden.

Vorzugsweise erfolgen die Auswahl von Temperatur, Volumenstrom und Katalysatormenge im zweiten Katalysatorbett derart, dass dort ein weiterer Abbau des N₂O-Gehalts des Gases um mindestens 30%, bezogen auf den N₂O Gehalt am Eingang des zweiten Katalysatorbettes, erfolgt.

Das erfindungsgemäße Verfahren wird bei einem erhöhten Druck von mindestens 2 bar, vorzugsweise mindestens 3 bar, ganz besonders bevorzugt von 4 bis 25 bar durchgeführt. Die Einspeisung des Reduktionsmittels zwischen dem ersten und dem zweiten Katalysatorbett, d.h. hinter dem ersten und vor dem zweiten Katalysatorbett, erfolgt durch eine geeignete Vorrichtung, wie z.B. einem entsprechenden Druckventil oder entsprechend ausgestalteten Düsen.

In der ersten Reaktionszone wird im allgemeinen eine relativ niedrige Wasserkonzentration bevorzugt, da ein sehr hoher Wassergehalt hohe Betriebstemperaturen (z.B. >500°C) erforderlich machen würde. Diese könnte je nach eingesetztem Zeolithtyp und Betriebsdauer die hydrothermalen Stabilitätsgrenzen des Katalysators überschreiten. Allerdings spielt hier der NOₓ-Gehatt eine entscheidende Rolle, da dieser die Deaktivierung durch Wasser aufheben kann.

Für die NOₓ-Reduktion in der zweiten Reaktionszone spielt ein hoher Wassergehalt eine untergeordnete Rolle, da hier bereits bei relativ niedrigen Temperaturen hohe NOₓ-Abbauraten erzielt werden.

Das Reduktionsmittel wird in einer solchen Menge zugesetzt, wie zur Reduktion des NOₓ benötigt wird. Darunter wird im Rahmen dieser Beschreibung diejenige Menge an Reduktionsmittel verstanden, die notwendig ist, um den Anteil des NOₓ im Gasgemisch vollständig oder bis zur gewünschten Endkonzentration zu reduzieren, ohne dass eine merkliche Reduktion des N₂O stattfindet.

Als Reduktionsmittel können solche Stoffe eingesetzt werden, die eine hohe Aktivität und Selektivität zur Reduktion von NO₂ aufweisen und deren Selektivität und Aktivität unter den gewählten Reaktionsbedingungen größer ist als zur möglichen Reduktion von N₂O.

Als Reduktionsmittel sind beispielsweise Kohlenwasserstoffe, Wasserstoff, Kohlenmonoxid, Ammoniak oder deren Gemische, wie z.B. Synthesegas, einsetzbar. Besonders bevorzugt wird Ammoniak oder Stoffe, die bei Einbringung Ammoniak freisetzen, wie Harnstoff oder Ammoniumcarbamat.

Die zugesetzte Menge an Reduktionsmittel darf dabei nicht nennenswert größer sein, als bei den gewählten Reaktionsbedingungen zur Reduktion von NOₓ erforderlich ist.

Erfindungsgemäß wird Ammoniak als Reduktionsmittel verwendet, je nach dem gewünschten Grad des Abbaus des NOₓ-Gehaltes, 1,0 bis 1,2 molare Anteile an Ammoniak, bezogen auf einen molaren Anteil an NOₓ.

Bei Auswahl geeigneter Katalysatoren und Verfahrensbedingungen wirkt das zugesetzte NH₃ nicht als Reduktionsmittel für N₂O, sondern reduziert selektiv das im Abgas enthaltene NOₓ.

Das erfindungsgemäße Verfahren ermöglicht es damit, die Beseitigung von N₂O und von NOₓ bei einer niedrigen Betriebstemperatur mit geringem Verbrauch an gasförmigen Reduktionsmittel, wie NH₃, durchzuführen, was mit den im Stand der Technik beschriebenen Verfahren bis dahin nicht möglich war.

Dieses ist insbesondere dann von großem Vorteil, wenn große Mengen an N₂O beseitigt werden sollen.

Auch die Art der Einbringung des gasförmigen Reduktionsmittels in den zu behandelnden Gasstrom ist im Sinne der Erfindung frei gestaltbar, solange dieses in Stromrichtung vor dem zweiten Katalysatorbett erfolgt. Sie kann zum Beispiel in der Eintrittsleitung vor dem Behälter für das zweite Katalysatorbett oder unmittelbar vor dem Katalysatorbett erfolgen. Das Reduktionsmittel kann in Form eines Gases oder auch einer Flüssigkeit bzw. wässrigen Lösung eingebracht werden, die im zu behandelnden Gasstrom verdampft.

Erfindungsgemäß verwendete Katalysatoren enthalten im wesentlichen, vorzugsweise > 50 Gew%, insbesondere > 70 Gew.% eines oder mehrerer mit Eisen beladener Zeolithe. So kann beispielsweise neben einem Fe-ZSM-5 Zeolith ein weiterer Eisen enthaltender Zeolith, wie z.B. ein eisenhaltiger Zeolith des MFI-, oder FER-Typs, in dem erfindungsgemäß verwendeten Katalysator enthalten sein. Darüber hinaus kann der erfindungsgemäß verwendete Katalysator weitere dem Fachmann bekannte Zusatzstoffe, wie z.B. Bindemittel enthalten.

Erfindungsgemäß verwendete Katalysatoren basieren vorzugsweise auf Zeolithen, in die durch einen Festkörper-Ionenaustausch Eisen eingebracht wurde. Üblicherweise geht man hierfür von den kommerziell erhältlichen Ammonium-Zeolithen (z.B. NH₄-ZSM-5) und den entsprechenden Eisensalzen (z.B. FeSO₄ x 7 H₂O) aus und mischt diese auf mechanischem Wege intensiv miteinander in einer Kugelmühle bei Raumtemperatur. (Turek et al.; Appl. Catal. 184, (1999) 249-256; 0955080). Auf diese Literaturstellen wird hiermit ausdrücklich Bezug genommen. Die erhaltenen Katalysatorpulver werden anschließend in einem Kammerofen an der Luft bei Temperaturen im Bereich von 400 bis 600°C kalziniert. Nach dem Kalzinieren werden die eisenhaltigen Zeolithe in destilliertem Wasser intensiv gewaschen und nach Abfiltrieren des Zeolithen getrocknet. Abschließend werden die so erhaltenen eisenhaltigen Zeolithe mit den geeigneten Bindemitteln versetzt und gemischt und beispielsweise zu zylindrischen Katalysatorkörpern extrudiert. Als Bindemittel eignen sich alle üblicherweise verwendeten Binder, die gebräuchlichsten sind hierbei Aluminiumsilikate wie z.B. Kaolin.

Gemäß der vorliegenden Erfindung sind die verwendbaren Zeolithe mit Eisen beladen. Der Eisengehalt kann dabei bezogen auf die Masse an Zeolith bis zu 25% betragen, vorzugsweise jedoch 0,1 bis 10%.

Vorzugsweise handelt es sich um mit Eisen beladene Zeolithe vom Typ MFI, BEA, FER, MOR, FAU und/oder MEL, insbesondere vom Typ ZSM-5.

In einer bevorzugten Ausführungsform werden zumindest im zweiten Katalysatorbett mit Eisen beladene Zeolithe verwendet, deren Kristallstruktur keine Poren bzw. Kanäle mit kristallographischen Durchmessern größer gleich 7,0 Ångstrom aufweist.

Dazu zählen mit Eisen beladene Zeolithe vom Typ MFI, FER und/oder MEL, insbesondere vom Typ ZSM-5.

Im erfindungsgemäßen Verfahren ist auch der Einsatz solcher Zeolithe eingeschlossen, in welchen das Gitteraluminium teilweise durch ein oder mehrere Elemente isomorph substituiert ist, beispielsweise durch ein oder mehrere Elemente ausgewählt aus B, Be, Ga, Fe, Cr, V, As, Sb und Bi ersetzt ist. Ebenso eingeschlossen ist der Einsatz von Zeolithen, bei denen das Gittersilicium durch ein oder mehrere Elemente isomorph substituiert ist, beispielsweise durch ein oder mehrere Elemente ausgewählt aus Ge, Ti, Zr und Hf ersetzt ist.

Genaue Angaben zum Aufbau oder Struktur der erfindungsgemäß eingesetzten Zeolithe werden im Atlas of Zeolite Structure Types, Elsevier, 4th revised Edition 1996, gegeben, auf den hiermit ausdrücklich Bezug genommen wird.

Ganz besonders bevorzugt kommen im erfindungsgemäßen Verfahren die weiter oben definierten Zeolith-Katalysatoren zum Einsatz, die mit Wasserdampf behandelt worden sind ("gesteamte" Katalysatoren). Durch eine derartige Behandlung wird das Gitter des Zeolithen dealuminiert; diese Behandlung ist dem Fachmann an sich bekannt. Überraschenderweise zeichnen sich diese hydrothermal behandelte Zeolith-Katalysatoren im erfindungsgemäßen Verfahren durch eine besonders hohe Aktivität aus.

Bevorzugt werden hydrothermal behandelte Zeolith-Katalysatoren eingesetzt, die mit Eisen beladen worden sind und bei denen das Verhältnis von Extra-Gitter-Aluminium zu Gitter-Aluminium mindestens 1 : 2 beträgt, vorzugsweise 1:2 bis 20:1 beträgt.

Der Wassergehalt des Reaktionsgases liegt vorzugsweise im Bereich von <25 Vol.%, insbesondere im Bereich <15 Vol.%. Ein niedriger Wassergehalt ist im allgemeinen zu bevorzugen.

Im allgemeinen wird eine relativ niedrige Wasserkonzentration bevorzugt, da höhere Wassergehalte höhere Betriebstemperaturen erforderlich machen würden. Diese könnte je nach eingesetztem Zeolithtyp und Betriebsdauer die hydrothermalen Stabilitätsgrenzen des Katalysators überschreiten und ist somit dem jeweils gewählten Einzelfall anzupassen.

Auch die Anwesenheit von CO₂ sowie von anderen desaktivierenden Bestandteilen des Reaktionsgases, die dem Fachmann bekannt sind, sollten nach Möglichkeit minimiert werden, da sich diese negativ auf den N₂O-Abbau auswirken würden.

Das erfindungsgemäße Verfahren arbeitet auch in Gegenwart von O₂, da die erfindungsgemäß verwendeten Katalysatoren entsprechende Selektivitäten aufweisen, die bei Temperaturen <500°C eine Reaktion des gasförmigen Reduktionsmittels, wie NH₃, mit O₂ unterdrücken.

All diese Einflussfaktoren, sowie die gewählte Katalysatorbelastung d.h. Raumgeschwindigkeit sind bei der Wahl der geeigneten Betriebstemperatur der Reaktionszone zu berücksichtigen.

Das erfindungsgemäße Verfahren kann besonders bei der Salpetersäureproduktion, bei Kraftwerksabgasen oder bei Gasturbinen zum Einsatz kommen. In diesen Prozessen fallen stickoxidhaltige Prozeß- und Abgase an, die mit Hilfe des hier aufgezeigten Verfahrens kostengünstig entstickt werden können. Das erfindungsgemässe Verfahren wird zweckmäßigerweise im Restgas der Salpetersäureproduktion nach dem Absorptionsturm eingesetzt.

Die Ausführung der Katalysatorbetten ist im Sinne der Erfindung frei gestaltbar. So kann beispielsweise der Katalysator oder die Katalysatoren in einem axial oder vorzugsweise radial durchströmten Katalysatorbett angeordnet sein, die in einem oder mehreren Behältern untergebracht sind.

Das erfindungsgemäße Verfahren kann in einer Vorrichtung zur Minderung des Gehalts von NOₓ und N₂O in Gasen, insbesondere in Prozessgasen und Abgasen, betrieben werden, umfassend:
A) zwei hintereinander geschaltete Katalysatorbetten enthaltend einen oder mehrere mit Eisen beladene Zeolithe, welche von dem NOₓ und N₂O enthaltenden Gas durchströmt werden,
B) eine zwischen den Katalysatorbetten angeordnete Vorrichtung zur Einbringung eines gasförmigen Reduktionsmittels in den Strom des NOₓ und N₂O enthaltenden Gases, wobei
C) mindestens eines der Katalysatorbetten von dem NOₓ und N₂O enthaltenden Gas radial durchströmt wird.

In einer bevorzugten Ausführungsform der im erfindungsgemäßen Verfahren einsetzbaren Vorrichtung sind beide Katalysatorbetten in einem Behälter angeordnet, was die Apparatekosten deutlich senkt.

In der im erfindungsgemäßen Verfahren einsetzbaren Vorrichtung wird, mindestens ein Katalysatorbett, bevorzugt beide Katalysatorbetten, vom zu reinigenden Gas radial durchströmt, was einen deutlich geminderten Druckverlust verursacht.

Die radial durchströmten Katalysatorbetten sind beispielsweise in der Form von Hohlzylindern ausgestaltet, können aber auch andere Formen aufweisen. Die radial durchströmten Katalysatorbetten können übereinander angeordnet sein oder es kann eine Kombination von axial und radial durchströmten Katalysatorbetten gewählt werden. Dabei ist durch geeignet angebrachte Trennflächen zwischen den Katalysatorbetten der Weg des Gases so vorzugeben, dass zunächst das erste und sodann das zweite Katalysatorbett durchströmt wird.

Im Fall von radial durchströmten Katalysatorbetten können diese auch in Form von konzentrisch ineinander angeordneten Hohlzylindern vorliegen. Auch bei dieser Ausführungsform ist darauf zu achten, dass durch geeignet angebrachte Trennflächen zwischen den Katalysatorbetten der Weg des Gases so vorgegeben wird, dass zunächst das erste und sodann das zweite Katalysatorbett durchströmt wird.

Die Strömungsrichtung des Gases kann im Radialkorbreaktor von innen nach außen oder von außen nach innen verlaufen.

In einer bevorzugten Ausführungsform der im erfindungsgemäßen Verfahren einsetzbaren Vorrichtung liegen zwei radial durchströmte Katalysatorbetten, beispielsweise in Form von zwei Hohlzylindern, mit verschiedenen Abmessungen vor, wobei das Außenmaß des einen Katalysatorbettes kleiner ist als das Innenmaß des anderen Katalysatorbettes und beide Katalysatorbetten konzentrisch zueinander angeordnet sind, und wobei durch geeignet angebrachte Trennflächen zwischen den Katalysatorbetten der Weg des Gases so vorgegeben wird, dass zunächst das erste und sodann das zweite Katalysatorbett durchströmt wird.

In einer weiteren bevorzugten Ausführungsform der im erfindungsgemäßen Verfahren einsetzbaren Vorrichtung wird das Gas nach Durchströmung des ersten Katalysatorbettes in einen Mischer geleitet, der vorzugsweise im Zentrum der Vorrichtung angeordnet ist, und bei der eine Zuleitung für Reduktionsmittel vorgesehen ist, die in den Raum hinter dem ersten Katalysatorbett und vor oder vorzugsweise in den Mischer mündet, und wobei das zu reinigende Gas nach Verlassen des Mischers durch das zweite Katalysatorbett geleitet wird.

Der Mischer dient zur innigen Verteilung des Reduktionsmittels im Gasstrom. Der Mischer ist frei gestaltbar, beispielsweise als statischer Mischer mit entsprechenden Einbauten oder als dynamischer Mischer. Auch die einfachste Form eines vorzugsweise turbulent durchströmten Rohres ist als Mischer im Sinne der Erfindung anzusehen.

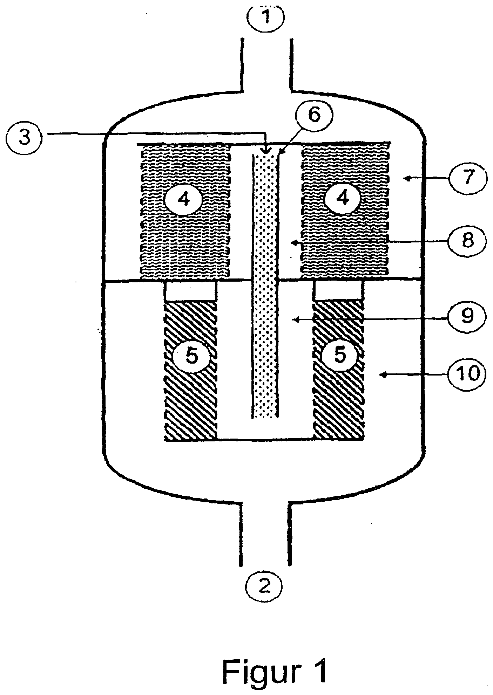

Figuren 1 bis 6 beschreiben bevorzugte Ausführungsformen des erfindungsgemäßen Verfahrens unter Verwendung einer bevorzugten Vorrichtung im Längsschnitt.
Figur 1 stellt eine im erfindungsgemäßen Verfahren eingesetzte Vorrichtung mit Gaseintritt (1) und Gasaustritt (2) dar. Im oberen, dem Gaseintritt (1) zugewandten Innenraum ist das erste Katalysatorbett in Form eines Hohlzylinders (4) angeordnet und befindet sich auf einer Trennwand, die den Raum der Vorrichtung in zwei Hälften aufteilt. Ferner ist die obere Seitenfläche des Hohlzylinders (4) durch eine Trennwand verschlossen. Das zu reinigende Gas strömt durch den Gaseintritt (1) und über den Ringspalt des Eintritts (7) des ersten Katalysatorbettes in den Ringspalt des Austritts (8) des ersten Katalysatorbettes radial durch das erste Katalysatorbett. Von dort strömt es in den Mischer (6), an dessen Eintrittsseite eine Eintrittsleitung (3) für das Reduktionsmittel mündet. Mischer (6) wird durch die Trennwand geführt und das Gas strömt sodann durch den Ringspalt des Eintritts (9) des unter dem ersten Katalysatorbett (4) angeordneten zweiten Katalysatorbettes (5) in den Ringspalt des Austritts (10) des zweiten Katalysatorbettes (5) radial durch das zweite Katalysatorbett. Von dort verlässt das gereinigte Gas die Vorrichtung über den Gasaustritt (2).

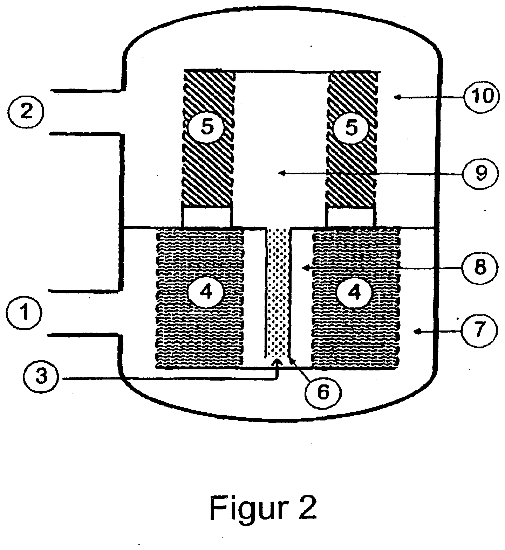

Figur 2 beschreibt eine ähnliche Ausführungsform wie Figur 1 mit der Abänderung, dass das erste Katalysatorbett (4) unterhalb des zweiten Katalysatorbettes (5) angeordnet ist und dass Gaseintritt (1) und Gasaustritt (2) seitlich in der Vorrichtung angeordnet sind. Die übrigen Bezugszeichen haben die bei der Beschreibung von Figur 1 aufgeführte Bedeutung.

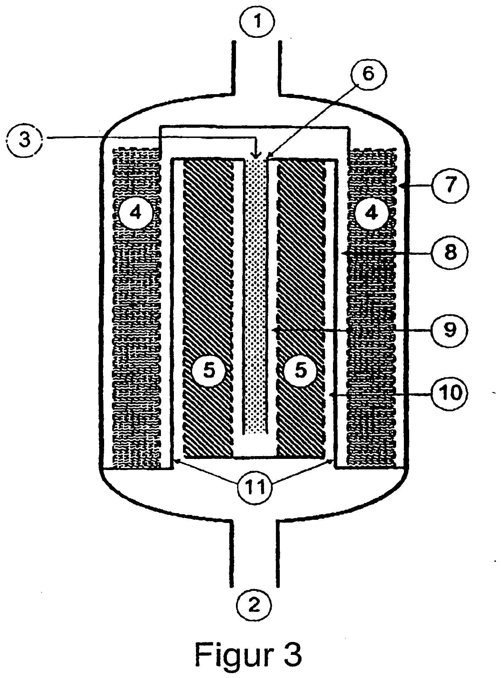

Figur 3 stellt eine weitere Ausführungsform der im erfindungsgemäßen Verfahren eingesetzten Vorrichtung mit Gaseintritt (1) und Gasaustritt (2) dar. Erstes Katalysatorbett (4) und zweites Katalysatorbett (5) sind hier in Form von zwei konzentrisch ineinander angeordneten Hohlzylindern ausgestaltet. Das erste Katalysatorbett (4) befindet sich außerhalb einer konzentrischen Trennwand (11), die die untere Seitenfläche des Katalysatorbettes (4), die Ringspalte (7) und (8) sowie den Innenraum der Vorrichtung und die obere Seitenfläche des zweiten Katalysatorbettes (5) abschließt. Das zu reinigende Gas tritt durch den Gaseintritt (1) in die Vorrichtung ein, durchströmt das erste Katalysatorbett vom Ringspalt Eintritt (7) radial von außen nach innen in den Ringspalt Austritt (8). Von dort strömt es in den Mischer (6), an dessen Eintrittsseite eine Eintrittsleitung (3) für das Reduktionsmittel mündet. Mischer (6) mündet in den Innenraum des zweiten Katalysatorbetts (5), das nach unter durch eine Trennwand verschlossen ist. Das Gas strömt sodann durch den Ringspalt des Eintritts (9) des zweiten Katalysatorbettes (5) in den Ringspalt des Austritts (10) des zweiten Katalysatorbettes (5) radial nach außen durch das zweite Katalysatorbett. Von dort verlässt das gereinigte Gas die Vorrichtung über den Gasaustritt (2).

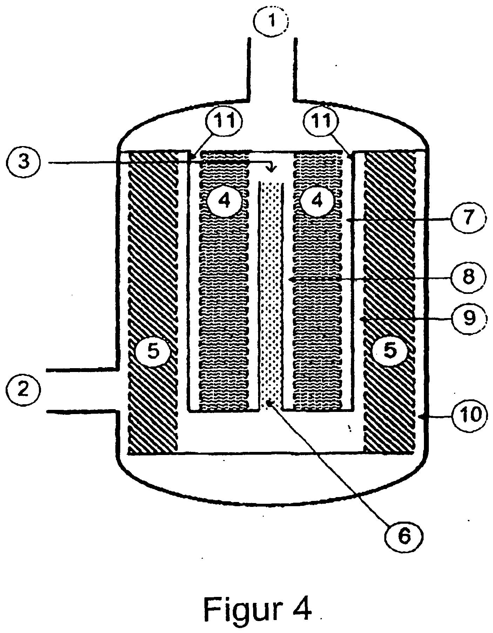

Figur 4 beschreibt eine ähnliche Ausführungsform wie Figur 3 mit der Abänderung, dass das erste Katalysatorbett (4) den inneren Hohlzylinder bildet und das zweite Katalysatorbett (5) den äußeren Hohlzylinder bildet. Die übrigen Bezugszeichen haben die bei der Beschreibung von Figur 3 aufgeführte. Bedeutung.

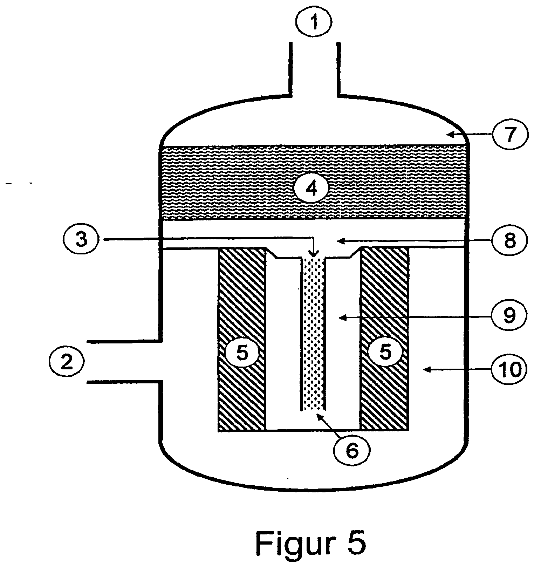

Figur 5 beschreibt eine Ausführungsform, in der ein axial und ein radial durchströmtes Katalysatorbett vorgesehen sind. Das Gas strömt über den Gaseintritt (1) axial durch das erste Katalysatorbett (4) und in den Mischer (6). In der Vorrichtung befindet sich eine Trennwand, die den Raum der Vorrichtung in zwei Hälften aufteilt. An der Eintrittsseite des Mischers (6) mündet eine Eintrittsleitung (3) für das Reduktionsmittel. Von Mischer (6) strömt das Gas in den Ringspalt des Eintritts (9) des zweiten Katalysatorbettes (5) und durch dieses radial in den Ringspalt des Austritts (10). Von dort verlässt das gereinigte Gas die Vorrichtung über den Gasaustritt (2).

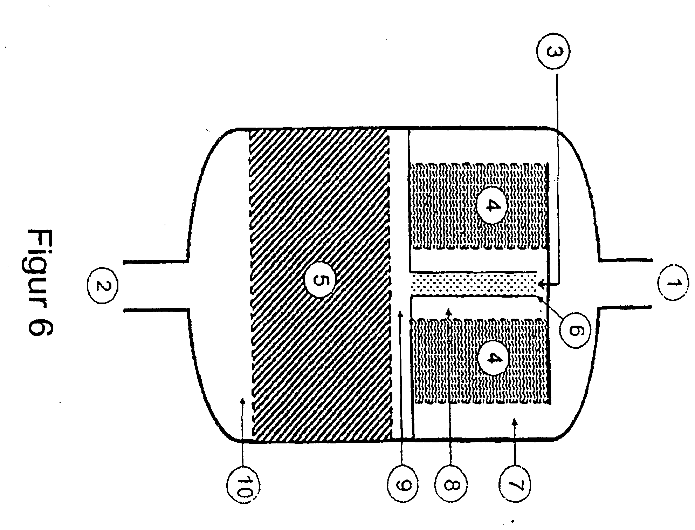

Figur 6 beschreibt eine ähnliche Ausführungsform wie Figur 5 mit der Abänderung, dass das erste Katalysatorbett (4) radial und das zweite Katalysatorbett (5) axial durchströmt werden. Die übrigen Bezugszeichen haben die bei der Beschreibung von Figur 3 aufgeführte Bedeutung.

Das erfindungsgemäße Verfahren wird durch das nachfolgende Beispiel erläutert.

Als Katalysator wurde ein mit Eisen beladener Zeolith vom Typ ZSM-5 eingesetzt. Die Herstellung des Fe-ZSM-5-Katalysators erfolgte durch Festkörper-Ionentausch ausgehend von einem kommerziell verfügbaren Zeolith in Ammonium-Form (ALSI-PENTA, SM27). Detaillierte Angaben zur Präparation können entnommen werden aus: M. Rauscher, K. Kesore, R. Mönnig, W. Schwieger, A. Tißler, T. Turek: "Preparation of highly active Fe-ZSM-5 catalyst through solid state ion exchange for the catalytic decomposition of N2O" in Appl. Catal. 184 (1999) 249-256.

Die Katalysatorpulver wurden an der Luft für 6h bei 823K kalziniert, gewaschen und über Nacht bei 383K getrocknet. Nach Zusatz entsprechender Binder folgte die Extrusion zu zylindrischen Katalysatorkörpern.

Als Vorrichtung zur Minderung des NOₓ- und N₂O-Gehaltes kamen zwei hintereinander geschaltete Rohrreaktoren zum Einsatz, welche jeweils mit einer solchen Menge an obigem Katalysator befüllt waren, dass bezogen auf den eintretenden Gasstrom jeweils eine Raumgeschwindigkeit von 15.000 h⁻¹ resultierte. Zwischen den beiden Reaktionszonen erfolgt die Zugabe von NH₃-Gas. Die Betriebstemperatur der Reaktionszonen wurde durch Beheizung eingestellt. Die Analyse der in die Reaktoren ein- und austretenden Gasströme erfolgte mit Hilfe eines FTIR-Gasanalysators.

Bei Eingangskonzentrationen von 1.500 ppm N₂O, 350 ppm NOₓ, 3.000 ppm H₂O und 1,2 %VOI O₂ in N₂ und einer intermediären Zugabe von NH₃ resultierten bei einer einheitlichen Betriebstemperatur von 425°C und einem Betriebsdruck von 6,5 bar die in der folgenden Tabelle aufgelisteten Umsatzergebnisse für N₂O, NOₓ und NH₃

**Tabelle**

| | Eingangskonzentration | Austrittskonzentration | Umsatz |
|---|---|---|---|
| N₂O | 1.500 ppm (Reaktor 1) | 540 ppm (Reaktor 1) | 64% |
| NO_{X} (x=1-2) | 360 ppm (Reaktor 2) | 80 ppm (Reaktor 2) | 78% |
| NH₃ | 310 ppm^{*)} (Reaktor 2) | 0 ppm (Reaktor 2) | 100% |
| N₂O | 540 ppm (Reaktor 2) | 190 ppm (Reaktor 2) | 65% |

| | | | |
|---|---|---|---|
| *) zugegeben zwischen erstem und zweiten Reaktor | | | |

## Patentansprüche

1. Verfahren zur Minderung des Gehalts von NOₓ und N₂O in Gasen, insbesondere in Prozessgasen und Abgasen, umfassend die Maßnahmen:
a) Leiten des N₂O und NOₓ enthaltenden Gases über eine Folge zweier Katalysatorbetten enthaltend einen oder mehrere mit Eisen beladene Zeolithe,
b) Zugabe eines Reduktionsmittels für NOₓ zwischen den Katalysatorbetten,
c) Einstellen einer Temperatur von weniger als 500°C im ersten Katalysatorbett und zweiten Katalysatorbett,
d) Einstellen eines Gasdruckes von mindestens 2 bar in den beiden Katalysatorbetten,
e) Auswahl einer solchen Raumgeschwindigkeit im ersten und zweiten Katalysatorbett, so dass im ersten Katalysatorbett ein Abbau des N₂O-Gehalts des Gases um höchstens 90%, bezogen auf den N₂O Gehalt am Eingang des ersten Katalysatorbettes, erfolgt und sich ein N₂O Gehalt von größer als 200 ppm einstellt und dass im zweiten Katalysatorbett ein weiterer Abbau des N₂O -Gehalts des Gases um mindestens 30%, bezogen auf den N₂O Gehalt am Eingang des zweiten Katalysatorbettes, erfolgt,
f) wobei als Reduktionsmittel für NOₓ Ammoniak verwendet wird, das in einer Menge von 1,0 bis 1,2 molaren Anteilen, bezogen auf einen molaren Anteil an abzubauendem NOₓ, eingesetzt wird.

2. Verfahren nach Anspruch 1, **dadurch gekennzeichnet, dass** im ersten und zweiten Katalysatorbett der gleiche Katalysator verwendet wird.

3. Verfahren nach Anspruch 1, **dadurch gekennzeichnet, dass** der oder die mit Eisen beladenen Zeolithe vom Typ MFI, BEA, FER, MOR, FAU und/oder MEL sind.

4. Verfahren nach Anspruch 3, **dadurch gekennzeichnet, dass** der mit Eisen beladene Zeolith vom Typ MFI ist.

5. Verfahren nach Anspruch 1, **dadurch gekennzeichnet, dass** der Zeolith ein Fe-ZSM-5 ist.

6. Verfahren nach Anspruch 1, **dadurch gekennzeichnet, dass** das Verfahren bei einem Druck im Bereich von 4 bis 25 bar durchgeführt wird.

7. Verfahren nach Anspruch 1, **dadurch gekennzeichnet, dass** das NOₓ und N₂O enthaltende Gas mit einer Raumgeschwindigkeit von 5.000 bis 50.000 h^{"1}, bezogen auf das addierte Katalysatorvolumen beider Katalysatorbetten über diese geleitet wird.

8. Verfahren nach Anspruch 1, **dadurch gekennzeichnet, dass** die Temperatur in der ersten und in der zweiten Reaktionszone zwischen 350 bis 450°C liegt.

9. Verfahren nach Anspruch 1, **dadurch gekennzeichnet, dass** in mindestens einem Katalysatorbett mit Eisen beladene Zeolithe eingesetzt werden, die mit Wasserdampf behandelt worden sind.

10. Verfahren nach Anspruch 1, **dadurch gekennzeichnet, dass** als Katalysatoren in mindestens einem Katalysatorbett mit Eisen beladene Zeolithe eingesetzt werden, bei denen das Verhältnis von Extra-Gitter-Aluminium zu Gitter-Aluminium mindestens 0,5 beträgt.

11. Verfahren nach Anspruch 1, **dadurch gekennzeichnet, dass** dieses in den Prozess der Salpetersäureproduktion integriert ist.

12. Verfahren nach Anspruch 1, **dadurch gekennzeichnet, dass** dieses in den Prozess des Betriebes einer Gasturbine integriert ist.

13. Verfahren nach Anspruch 1, **dadurch gekennzeichnet, dass** dieses in den Prozess des Betriebes eines Kraftwerks integriert ist.

## Claims

1. Process for reducing the content of NOₓ and N₂O in gases, in particular in process gases and offgases, which comprises the measures:
a) passing the N₂O- and NOₓ-containing gas over a sequence of two catalyst beds comprising one or more iron-laden zeolites,
b) adding a reducing agent for NOₓ between the catalyst beds,
c) setting a temperature of less than 500°C in the first catalyst bed and second catalyst bed,
d) setting a gas pressure of at least 2 bar in the two catalyst beds,
e) selecting a space velocity in the first and second catalyst beds such that a reduction in the N₂O content of the gas by not more than 90%, based on the N₂O content at the entrance to the first catalyst bed, occurs in the first catalyst bed and an N₂O content of greater than 200 ppm is established and that a further reduction in the N₂O content of the gas by at least 30%, based on the N₂O content at the entrance to the second catalyst bed, occurs in the second catalyst bed,
f) wherein ammonia is used as reducing agent for NOₓ and is employed in an amount of from 1.0 to 1.2 mol per mol of NOₓ to be removed.

2. Process according to Claim 1, **characterized in that** the same catalyst is used in the first and second catalyst beds.

3. Process according to Claim 1, **characterized in that** the iron-laden zeolite or zeolites is/are of the MFI, BEA, FER, MOR, FAU and/or MEL type.

4. Process according to Claim 3, **characterized in that** the iron-laden zeolite is of the MFI type.

5. Process according to Claim 1, **characterized in that** the zeolite is an Fe-ZSM-5.

6. Process according to Claim 1, **characterized in that** the process is carried out at a pressure in the range from 4 to 25 bar.

7. Process according to Claim 1, **characterized in that** the NOₓ- and N₂O-containing gas is passed over each of the catalyst beds at a space velocity of from 5,000 to 50,000 h⁻¹, based on the total catalyst volume of the two catalyst beds.

8. Process according to Claim 1, **characterized in that** the temperature in the first and second reaction zones is from 350 to 450°C.

9. Process according to Claim 1, **characterized in that** iron-laden zeolites which have been treated with water vapor are used in at least one catalyst bed.

10. Process according to Claim 1, **characterized in that** iron-laden zeolites in which the ratio of extralattice aluminum to lattice aluminum is at least 0.5 are used as catalysts in at least one catalyst bed.

11. Process according to Claim 1, **characterized in that** it is integrated into the process for nitric acid production.

12. Process according to Claim 1, **characterized in that** it is integrated into the process of operation of a gas turbine.

13. Process according to Claim 1, **characterized in that** it is integrated into the process of operation of a power station.

## Revendications

1. Procédé pour réduire la teneur en NOₓ et en N₂O de gaz, en particulier de gaz de processus et de gaz d'échappement, comprenant les étapes:
a) de passage du gaz contenant le NOₓ et le N₂O à travers une succession de deux lits de catalyseur contenant une ou plusieurs zéolites chargées de fer,
b) d'addition entre les lits de catalyseur d'un agent de réduction pour le NOₓ,
c) d'ajustement d'une température inférieure à 500 °C dans le premier lit de catalyseur et dans le deuxième lit de catalyseur,
d) d'ajustement d'une pression de gaz d'au moins 2 bars dans les deux lits de catalyseur,
e) de sélection d'une vitesse spatiale dans le premier et le deuxième lit de catalyseur telle que dans le premier lit de catalyseur se produise une réduction de la teneur en N₂O du gaz d'au plus 90 %, par rapport à la teneur en N₂O à l'entrée du premier lit de catalyseur, et qu'il s'établisse une teneur en N₂O supérieure à 200 ppm, et que dans le deuxième lit de catalyseur se produise une réduction supplémentaire de la teneur en N₂O du gaz d'au moins 30 %, par rapport à la teneur en N₂O à l'entrée du deuxième lit de catalyseur.
f) comme agent de reduction pour le NOₓ de l'ammoniac est utilisé, lequel est employé en une quantité de proportion molaire de 1,0 à. 1,2 par rapport á une proportion molaire de NOₓ à décomposer.

2. Procédé selon la revendication 1, **caractérisé en ce que** le même catalyseur est utilisé dans les premier et deuxieme lits de catalyseur.

3. Procédé selon la revendication 1, **caractérisé en ce que** la ou les zéolites chargées de fer sont de type MFI, BEA, FER, MOR, FAU et/ou MEL.

4. Procédé selon la revendication 3, **caractérisé en ce que** la zéolite chargée de fer est du type MFI.

5. Procédé selon la revendication 1, **caractérisé en ce que** la zéolite consiste en Fe-ZSM-5.

6. Procédé selon la revendication 1, **caractérisé en ce que** le procédé est effectué sous une pression comprise dans la plage de 4 à 25 bars.

7. Procédé selon la revendication 1, **caractérisé en ce que** le gaz contenant du NOₓ et N₂O est passé sur les deux lits de catalyseur à une vitesse spatiale de 5.000 à 50.000h^{"1} par rapport au volume total de catalyseur des deux lits de catalyseur.

8. Procédé selon la revendication 1, **caractérisé en ce que** dans les première et deuxième zones de réaction la temperature est comprise entre 350 et 450 °C.

9. Procédé selon la revendication 1, **caractérisé en ce que** dans au moins un lit de catalyseur des zéolites chargées de fer sont utilisées, lesquelles ont été traitées par de la vapeur d'eau.

10. Procédé selon la revendication 1, **caractérisé en ce que** dans au moins un lit de catalyseur, sont utilisées comme catalyseurs des zéolites chargées de fer pour lesquelles le rapport aluminium hors réseau à aluminium du réseau est d'au moins 0,5.

11. Procédé selon la revendication 1, **caractérisé en ce qu'**il est intégré dans le procédé de production d'acide nitrique.

12. Procédé selon la revendication 1, **caractérisé en ce qu'**il est intégré dans le procédé de fonctionnement d'une turbine à gaz.

13. Procédé selon la revendication 1, **caractérisé en ce qu'**il est integré dans le procédé de fonctionnement d'une centrale électrique.
